(19)

Europäisches Patentamt

European Patent Office

Office européen des brevets

(11) **EP 4 105 833 A1**

(12) **EUROPEAN PATENT APPLICATION**

(43) Date of publication:
**21.12.2022 Bulletin 2022/51**

(51) International Patent Classification (IPC):
**G06N 3/04** (2006.01) **G06N 3/08** (2006.01)

(21) Application number: **21179920.0**

(52) Cooperative Patent Classification (CPC):
**G06N 3/08; G06N 3/0454**

(22) Date of filing: **17.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Kittel, Markus**
  **82319 Starnberg (DE)**
• **Krompaß, Denis**
  **81549 München (DE)**
• **Runkler, Thomas**
  **81929 München (DE)**

(54) **CENTRAL TECHNICAL COMPONENT FOR GENERATING AN AGGREGATED UP-DATED MACHINE LEARNING PARAMETER**

(57) The invention is directed to Central technical component (10) for generating an aggregated updated Machine Learning parameter (12), wherein a. the central technical component (10) is configured for receiving at least one respective locally updated Machine Learning parameter (22) regarding a common Machine Learning system from each decentral technical component (20) of a plurality of decentral technical components; wherein b. the common Machine Learning system is consistently deployed on each decentral technical component (20) and the updates of the respective Machine Learning parameters (22) are performed locally on each decentral technical component (20); wherein c. the central technical component (10) is configured for receiving a respective number of anomalous data samples (24) from each decentral technical component (20) of the plurality of decentral technical components; wherein d. the number of anomalous data samples (24) is derived from labeled data with a plurality of data samples which are each tagged with at least one label, wherein the labeled data is used during the local updates on the decentral technical units (20) and the labels are binary values that indicate if a data sample is from a normal operation or an anomalous operation; wherein e. the central technical component (10) is configured for generating the aggregated updated Machine Learning parameter (12) using an aggregation rule based on the received plurality of locally updated Machine Learning parameters (22) and the total number of anomalous data samples (24); and f. the central technical component (10) is configured for transmitting the aggregated updated Machine Learning parameter (12) to each decentral technical component (20) of the plurality of decentral technical components for the common Machine Learning System. Further, the invention relates to a computer-implemented method and a computer program product.

FIG 1

EP 4 105 833 A1

**Description**

1. Technical field

The present invention relates to a computer-implemented method for generating a central technical component for generating an aggregated updated Machine Learning parameter. Further, the invention relates to a corresponding computer-implemented method and a corresponding computer program product.

2. Prior art

Currently there is a trend of digitalization in the industry domain. For example, a manufacturing process for a product may be digitally controlled. For describing several facets of this trend the term "Industry 4.0" (in German: "Industrie 4.0") is a commonly used term. It has become not only a major part of today's industry, but it also drives the business in many industrial domains.

Industrial Machine learning (ML) is of key importance in this context. In general, ML algorithms try to learn an ML model with previous collected data, which is then used after training to make predictions using the trained ML model based on new, unseen data. Usually, according to prior art, the ML learning workflow is centralized.

In many setups like anomaly detection, predictive maintenance or any other form of feature extractor, sharing knowledge or information over multiple clients is essential regarding the performance of the ML model. However, up to now, especially in the industry domain, companies are very sensitive when it comes to sharing data with suppliers or even competitors.

Moreover, the ML parameters for the ML model are usually specified once during design e.g. based on expert estimations, available data from standards, literature and databases etc. However, the model parameters in the field (real world) can be different from those assumed at design time or due to changes (e.g. new system environment) over the lifetime of the system. There are a variety of reasons for this drift, such as inaccurate estimates, different use cases than foreseen and different environmental conditions etc. Usually, according to prior art, updates for ML parameters are not performed due to e.g. the high manual effort and the lack of design for data collection. The disadvantage is that the system model including the system model parameters remains conserved and the model prediction performance in the real world, considering environmental aspects, use cases not foreseen during design etc. may significantly decrease over time.

Hence, there is an increasing need to securely update the ML model and its parameters, which is deployed on distinct client sites.

It is therefore an objective of the invention to provide a central technical component for generating an aggregated updated Machine Learning parameter in an efficient and reliable manner.

3. Summary of the invention

This problem is according to one aspect of the invention solved by a Central technical component for generating an aggregated updated Machine Learning parameter, wherein:

a. the central technical component is configured for receiving at least one respective locally updated Machine Learning parameter regarding a common Machine Learning system from each decentral technical component of a plurality of decentral technical components; wherein

b. the common Machine Learning system is consistently deployed on each decentral technical component and the updates of the respective Machine Learning parameters are performed locally on each decentral technical component; wherein

c. the central technical component is configured for receiving a respective number of anomalous data samples from each decentral technical component of the plurality of decentral technical components; wherein

d. the number of anomalous data samples is derived from labeled data with a plurality of data samples which are each tagged with at least one label, wherein the labeled data is used during the local updates on the decentral technical units and the labels are binary values that indicate if a data sample is from a normal operation or an anomalous operation; wherein

e. the central technical component is configured for generating the aggregated updated Machine Learning parameter using an aggregation rule based on the received plurality of locally updated Machine Learning parameters and the total number of anomalous data samples; and

f. the central technical component is configured for transmitting the aggregated updated Machine Learning parameter to each decentral technical component of the plurality of decentral technical components for the common Machine Learning System.

Accordingly, the central technical component is suitable for generating an aggregated updated Machine Learning (ML) parameter. The aggregated updated Machine Learning parameter can be equally referred to as global ML parameter.

The central technical component receives the locally updated Machine Learning parameters and the total number of anomalous data samples from each decentral technical component as input data for the generation of the aggregated updated Machine Learning (ML) parameter. Therefore, the aggregation rule is applied on the input data.

In other words, the ML system is consistently deployed on the decentral technical units and hence the decentral technical units share a common ML system. The generation of the aggregated updated Machine Learning parameter can be triggered by the central technical unit e.g. by asking the decentral units to perform local updates of their ML parameters with the locally collected training data. The local update results in e.g. a delta between the initial (old) ML parameters and the current (new) ML parameters. Additionally, each decentral unit tracks how many anomalous data samples where present in the training data used to compute the update.

This input data (the locally updated Machine Learning parameters and the total number of anomalous data samples) is transmitted from the decentral technical units to the central technical unit, hence received by the central technical component.

After reception of the input data, the central technical component computes the aggregated updated Machine Learning parameter by using the aggregation rule. The new version of the global ML system is rolled out to all decentral technical units.

The advantage of the present invention is that the generation of the aggregated updated Machine Learning parameter (global update) is performed by one autonomous technical component, decoupled from the decentral technical components, in an efficient and reliable manner.

The decentral technical components are not affected by this global update and can utilize the deployed and consistent ML system as usual in normal operation mode. Any downtimes of the ML system on e.g. autonomous units or robots are prevented. Hence, also the autonomous units, robots or other units of an industrial plant remain unaffected and the e.g. robot can e.g. be controlled as usual or perform manufacturing processes as usual.

Moreover, the present invention guarantees that the deployed ML system is continuously supplied with current or up to date ML parameters. Therefore, the global update can be triggered in regular intervals or depending on events.

The central technical component according to the invention can be used for automated quality control of welds in a robot-based welding during car manufacturing or applied in other use cases.

In one aspect the central technical component is a server and/or the decentral technical components are edge devices, preferably autonomous units or robots.

In another aspect the Machine Learning system is a supervised machine learning model suitable for binary classification, preferably a Neural Network or a Deep Neural Network.

In a further aspect the updates performed locally on the decentral technical units are triggered by the central technical component, preferably by means of a HTTP GET Request or other means.

In a further aspect the at least one updated Machine Learning parameter from the decentral technical components can be designed as at least one delta between at least one initial parameter and at least one current parameter; wherein the parameters are preferably former aggregated updated Machine Learning parameters transmitted from the central technical component.

In a further aspect the aggregation rule is a weighted average of the received plurality of locally updated Machine Learning parameters, wherein the weights in the average are proportional to the number of anomalous data samples.

In a further aspect the locally updated Machine Learning parameters, the total number of anomalous data samples and/or other local data transmitted from the decentral technical components to the central technical component are encrypted using a secure aggregation protocol. Accordingly, the received input data (the locally updated Machine Learning parameters and the total number of anomalous data samples) for the central technical unit can be encrypted for data transmission using the secure aggregation protocol. The advantage is that the secure aggregation protocol guarantees that none of the locally computed data by the decentral units can be reconstructed by any third party, including the central technical component. The central technical component sums the encrypted locally updated Machine Learning parameters and the total number of anomalies. The result is the decrypted total amount of anomalies observed in this communication round and the sum of all local parameter updates.

In a further aspect the central and decentral technical component exchange data via a data bus, preferably bidirectional. Accordingly, the input data (the locally updated Machine Learning parameters and the total number of anomalous data samples) is transmitted from the decentral technical units to the central technical units for said generation of the aggregated updated Machine Learning parameter. Additionally, the output data (the aggregated updated Machine Learning parameter) is transmitted from the central technical component to the decentral technical components. Moreover, other data can be transmitted bidirectionally as well.

A further aspect of the invention is a computer-implemented method.

A further aspect is a computer program product.

4. Short description of the drawings

In the following detailed description, presently preferred embodiments of the invention are further described with reference to the following figures:

Fig. 1    shows a schematic representation of the central technical component according to an embodiment.

Fig. 2    illustrates a flowchart of the computer-implemented method according to the invention.

5. Detailed description of preferred embodiments

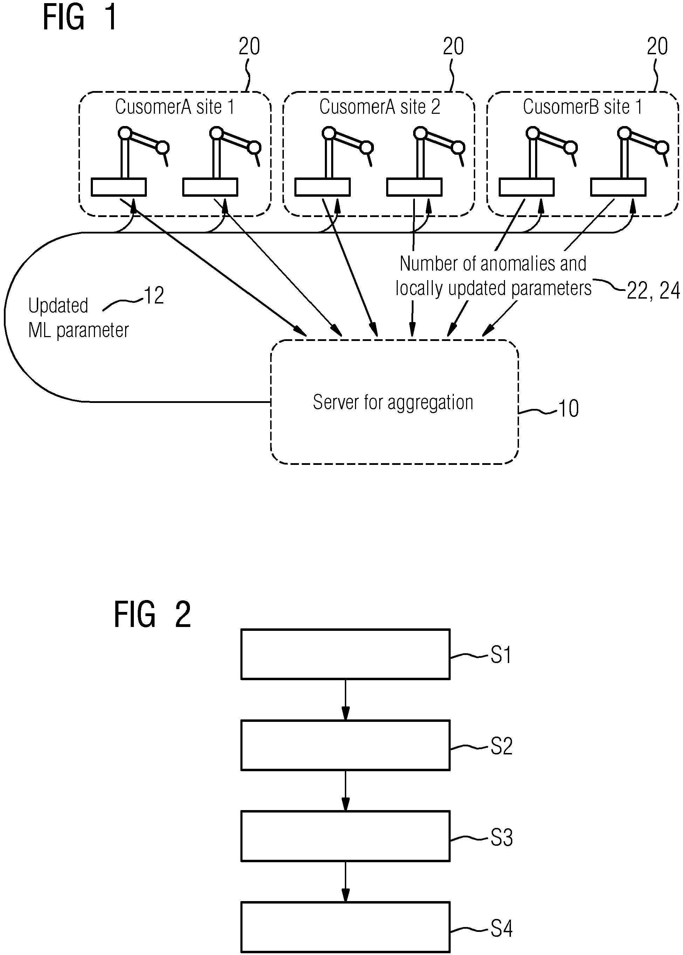

Figure 1 shows the central technical component in form of a server 10. The server 10 receives the input data 22, 24 from the decentral technical components 20. The input data comprise the locally updated Machine Learning parameters and the total number of anomalous data samples. In other words, the locally updated ML parameters are scaled by the total amount of locally observed anomalies. The decentral technical components 20 are designed as robots according to an embodiment. The Machine Learning system is deployed on e.g. six different welding robots 20 on three different sites of two different customers (A and B).

The server 10 performs the secure aggregation based on the input data 22, 24 and generates the aggregated updated Machine Learning parameter as output data. The aggregated updated Machine Learning parameter 22 is rolled out to the decentral technical components 20.

The ML system

The ML system can consist of any differentiable and parametrized function $f_w$ (e.g. a Deep Neural Network) that can perform binary classification on the given input data 22, 24 and is optimized in an iterative manner (e.g. Gradient Descent) where one class indicates normal operation and the other class anomalous operation. In other words, the first class represents normal operations, and the second class represents anomalous operations. According to an embodiment, a 1D convolutional deep neural network is used as ML system. The 1D convolutional deep neural network hast a single output that is activated with a sigmoid activation function that optimizes a binary cross entropy objective between the model output $f_d(x)$ and the corresponding labels y with Gradient Descent.

Initial ML system deployment

According to an embodiment, assuming that prior historic data is available for the use case a pre-training of the initial ML system is performed before it will be deployed on the decentral technical units 20.

According to a further embodiment, additionally or alternatively, a platform for deploying the ML system already exists on site and can be remotely accessed by a controlled server instance (Server). A suitable platform is e.g. the Sinumerik Edge or comparable edge devices with access to the data bus of the monitored welding robot, to be more specific the voltage and the current signals measured during operation. According to a further embodiment, additionally or alternatively, this locally observed data can be stored in a database or other storage unit e.g. cloud which can be accessed by the ML system. The storage unit preferably provides the capability to add or reference the annotations, if the observed data belongs to an anomalous operation or not. Moreover, it can be beneficial for the quality of the anomaly detection to have also access to reference signals that represent a normal operation.

The central technical component 10 can roll out the initial version of the ML system to the decentral technical component 20 which would only actively monitor and report anomalies to the local operator, if it is expected that the ML system's detection quality is sufficient. With the first sites where this system is deployed, this will only be the case if sufficient historic data exists to pre-train the system. As the system matures over time the ML system can be directly applied for anomaly detection at clients. Independent if the ML system is active or not the data recording must be active.

Local updates of the respective Machine Learning parameters

At time t + 1, the server will initiate a "communication round" where it asks clients to compute and share local ML parameter updates to improve the overall system. The triggering can be done via HTTP GET Request where each client will report back if it is available for computing the updates.

$$
\begin{aligned}
&\textbf{ClientUpdate}(k, w_G^t)\textbf{:} \\
&\mathcal{B} \leftarrow (\text{split } D_k \text{ into batches of size } B) \\
&\textbf{foreach } \textit{local epoch i from 1 to E } \textbf{do} \\
&\qquad \textbf{foreach } \textit{batch } b \in \mathcal{B} \textbf{ do} \\
&\qquad\qquad w \leftarrow w - \eta \nabla L(w; b) \\
&\qquad \textbf{end} \\
&\textbf{end} \\
&\Delta w \leftarrow w_G^t - w \\
&\text{return } \Delta w \text{ to server}
\end{aligned}
$$

The update for each decentral technical component k is performed as follows. First, the decentral technical collects annotated data samples e.g. from the local database. Then, the local ML system will copy its parameters $w_G^t$ and compute the update that optimize detection quality on the collected data samples given binary cross entropy objective $L(w;b)$ with gradient descent for multiple epochs. Alternatively, other objectives can be used, like focal loss. Thereby, w indicates the current state of the copied parameters (initially $w_G^t$ ), and b is a batch of data samples used to compute the partial derivate of the parameters w w.r.t. to the objective L. Finally, the delta between the initial parameters $w_G^t$ and $w$ is computed.

Generating the aggregated updated Machine Learning parameter

After the decentral units have computed their proposed parameter updates $\Delta w_k^{t+1}$, they are transmitted together with number of anomalous data samples $\alpha_k$ used in the local update computations. Both the parameter updates $\Delta w_k^{t+1}$ and $\alpha_k$ are used by the central technical component to update the global ML parameters $w_G^{t+1}$ by a weighted average of the client parameter update proposals $\Delta w_k^{t+1}$ where the weights in the average a proportional to the total number of anomalies, resulting in the aggregated updated Machine Learning parameter:

$$
w_G^{t+1} \leftarrow w_G^t + \frac{1}{\sum_{k=1}^K a_k} \sum_{k=1}^K a_k \Delta w_k^{t+1}
$$

Privacy preserving experience exchange with the central technical component

The generation of the aggregated updated Machine Learning parameter not privacy preserving yet since the central technical component 10 has knowledge about the total number of anomalies 24 and the parameters of each component.

According to an embodiment, the Secure Aggregation Protocol is used to generate the aggregated updated Machine Learning parameter advantageously in a secure and privacy preserving manner. In comparison to the original formulation of the protocol for the Federated Averaging algorithm, the total number of anomalies $\alpha_k$ are encrypted such that only the sum of all anomalies from all decentral technical components can be reconstructed. This way the origin of any anomaly stays anonymous. In addition, according to a further embodiment, the total number of anomalies $\alpha_k$ are multiplied with the proposed parameters updates $\Delta w_k^{t+1}$ locally on the decentral technical unit before encrypting and transmitting them to the central technical component:

$$y_k = a_k \Delta w_k^{t+1} + \sum_{v \in K: k < v} s_{k,v} - \sum_{v \in K: k > v} s_{k,v}$$

$$h_k = a_k + \sum_{v \in K: k < v} s_{k,v} - \sum_{v \in K: k > v} s_{k,v}$$

On the central technical unit the global parameter update can then be computed by:

$$w_G^{t+1} \leftarrow w_G^t + \frac{1}{\sum_{k=1}^K h_k} \sum_{k=1}^K y_k$$

Global system parameters roll out

After the global ML system parameters have been updated with $w_G^{t+1}$ the server can roll out the updated parameters to the ML systems deployed at the clients using for example HTTP.

Fig. 2 shows a flowchart of the computer-implemented method according to the invention, comprising the method steps S1 to S4.

Reference signs

| | |
|---|---|
| 10 | central technical component |
| 12 | aggregated updated Machine Learning parameter |
| 20 | decentral technical component |
| 22 | locally updated Machine Learning parameter |
| 24 | number of anomalous data samples |
| S1 to S4 | Method steps S1 to S4 |

**Claims**

1. Central technical component (10) for generating an aggregated updated Machine Learning parameter (12), wherein:

a. the central technical component (10) is configured for receiving at least one respective locally updated Machine Learning parameter (22) regarding a common Machine Learning system from each decentral technical component (20) of a plurality of decentral technical components; wherein

b. the common Machine Learning system is consistently deployed on each decentral technical component (20) and the updates of the respective Machine Learning parameters (22) are performed locally on each decentral technical component (20); wherein

c. the central technical component (10) is configured for receiving a respective number of anomalous data samples (24) from each decentral technical component (20) of the plurality of decentral technical components; wherein

d. the number of anomalous data samples (24) is derived from labeled data with a plurality of data samples which are each tagged with at least one label, wherein the labeled data is used during the local updates on the decentral technical units (20) and the labels are binary values that indicate if a data sample is from a normal operation or an anomalous operation; wherein

e. the central technical component (10) is configured for generating the aggregated updated Machine Learning parameter (12) using an aggregation rule based on the received plurality of locally updated Machine Learning parameters (22) and the total number of anomalous data samples (24); and

f. the central technical component (10) is configured for transmitting the aggregated updated Machine Learning parameter (12) to each decentral technical component (20) of the plurality of decentral technical components for the common Machine Learning System.

2. Central technical component (10) according to claim 1, wherein the central technical component (10) is a server and/or the decentral technical components (20) are edge devices, preferably autonmous units or robots.

3. Central technical component (10) according to claim 1 or claim 2, wherein the Machine Learning system is a supervised machine learning model suitable for binary classification, preferably a Neural Network or a Deep Neural Network.

4. Central technical component (10) according to any of the preceding claims, wherein the updates performed locally on the decentral technical units (20) are triggered by the central technical component (10), preferably by means of a HTTP GET Request or other means.

5. Central technical component (10) according to any of the preceding claims, wherein the at least one locally updated Machine Learning parameter (22) from the decentral technical components (20) can be designed as at least one delta between at least one initial parameter and at least one current parameter; wherein the parameters are preferably former aggregated updated Machine Learning (12) parameters transmitted from the central technical component.

6. Central technical component (10) according to any of the preceding claims, wherein the aggregation rule is a weighted average of the received plurality of locally updated Machine Learning parameters (22), wherein the weights in the average are proportional to the number of anomalous data samples.

7. Central technical component (10) according to any of the preceding claims, wherein the locally updated Machine Learning parameters (22), the numbers of anomalous data samples (24) and/or other local data transmitted from the decentral technical components (20) to the central technical component (10) are encrypted using a secure aggregation protocol.

8. Central technical component (10) according to any of the preceding claims, wherein the central and decentral technical components (10, 20) exchange data via a data bus, preferably bidirectional.

9. Computer-implemented method for generating an aggregated updated Machine Learning parameter (12), comprising the steps:

   a. receiving at least one respective locally updated Machine Learning parameter (22) regarding a common Machine Learning system from each decentral technical component (20) of a plurality of decentral technical components by the central technical component (10) (S1); wherein
   b. the common Machine Learning system is consistently deployed on each decentral technical component (20) and the updates of the respective Machine Learning parameters (22) are performed locally on each decentral technical component (20); wherein
   c. receiving a respective number of anomalous data samples (24) from each decentral technical component (20) of the plurality of decentral technical components by the central technical component (10)(S2); wherein
   d. the number of anomalous data samples (24) is derived from labeled data with a plurality of data samples which are each tagged with at least one label, wherein the labeled data is used during the local updates on the decentral technical units (20) and the labels are binary values that indicate if a data sample is from a normal operation or an anomalous operation; wherein
   e. generating the aggregated updated Machine Learning parameter (12) using an aggregation rule based on the received plurality of locally updated Machine Learning parameters (22) and the total number of anomalous data samples (24) by the central technical component (10) (S3); and
   f. transmitting the aggregated updated Machine Learning parameter (12) to each decentral technical component (20) of the plurality of decentral technical components for the common Machine Learning System by the central technical component (10)(S4).

10. A computer program product directly loadable into an internal memory of a computer, comprising software code portions for performing the steps according to claim 9 when said computer program product is running on a computer.

## FIG 1

20                    20                    20

CusomerA site 1        CusomerA site 2        CusomerB site 1

Number of anomalies and
locally updated parameters ~22, 24

Updated ~12
ML parameter

Server for aggregation                ~10

## FIG 2

S1

S2

S3

S4

Europäisches
Patentamt

European
Patent Office

Office européen
des brevets

# EUROPEAN SEARCH REPORT

**Application Number**

**EP 21 17 9920**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM SEONGWOO ET AL: "Collaborative Anomaly Detection for Internet of Things based on Federated Learning", 2020 IEEE/CIC INTERNATIONAL CONFERENCE ON COMMUNICATIONS IN CHINA (ICCC), IEEE, 9 August 2020 (2020-08-09), pages 623-628, XP033853306, DOI: 10.1109/ICCC49849.2020.9238913 [retrieved on 2020-10-23] * abstract * * Section II; figures 1-3 * | 1-10 | INV. G06N3/04 G06N3/08 |
| A | WO 2021/080577 A1 (GOOGLE LLC [US]) 29 April 2021 (2021-04-29) * abstract * * paragraph [0050] – paragraph [0093]; figures 1-3 * | 1-10 | |
| X | LIU YI ET AL: "Deep Anomaly Detection for Time-Series Data in Industrial IoT: A Communication-Efficient On-Device Federated Learning Approach", IEEE INTERNET OF THINGS JOURNAL, IEEE, USA, vol. 8, no. 8, 24 July 2020 (2020-07-24), pages 6348-6358, XP011848182, DOI: 10.1109/JIOT.2020.3011726 [retrieved on 2021-04-06] * abstract * * Sections III to V, Algorithm 1; figures 1-3 * | 1-10 | TECHNICAL FIELDS SEARCHED (IPC) G06N |
| A | US 2021/150037 A1 (RADHAKRISHNAN JAYARAM KALLAPALAYAM [US] ET AL) 20 May 2021 (2021-05-20) * abstract * * paragraph [0026] – paragraph [0065]; figures 1-9 * | 1-10 | |

The present search report has been drawn up for all claims

| Place of search | Date of completion of the search | Examiner |
|---|---|---|
| The Hague | 14 December 2021 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 9920

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2021

| Patent document cited in search report | Publication date | Patent family member(s) | Publication date |
|---|---|---|---|
| WO 2021080577 A1 | 29-04-2021 | NONE | |
| US 2021150037 A1 | 20-05-2021 | US 2021150037 A1<br>WO 2021094879 A1 | 20-05-2021<br>20-05-2021 |

EPO FORM P0459

For more details about this annex : see Official Journal of the European Patent Office, No. 12/82